(19) **Europäisches Patentamt European Patent Office Office européen des brevets**

(11) **EP 4 401 574 B1**

(12) **EUROPEAN PATENT SPECIFICATION**

(45) Date of publication and mention
of the grant of the patent:
**17.09.2025 Bulletin 2025/38**

(21) Application number: **22782705.2**

(22) Date of filing: **12.09.2022**

(51) International Patent Classification (IPC):
**A23L 7/113** (2016.01)    **A23D 9/04** (2006.01)

(52) Cooperative Patent Classification (CPC):
**A23L 7/113; C11C 3/006**

(86) International application number:
**PCT/EP2022/075314**

(87) International publication number:
**WO 2023/041493 (23.03.2023 Gazette 2023/12)**

(54) **PROCESS FOR AN INSTANT NON-FRIED NOODLE AND A PRODUCT OBTAINED THEREBY**

VERFAHREN FÜR NICHT FRITTIERTE INSTANTNUDELN UND EIN DADURCH HERGESTELLTES PRODUKT

PROCÉDÉ POUR DES NOUILLES NON-FRITES INSTANTANÉES ET PRODUIT AINSI OBTENU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.09.2021 IN 202111041602**
**04.11.2021 EP 21206346**

(43) Date of publication of application:
**24.07.2024 Bulletin 2024/30**

(73) Proprietor: **Société des Produits Nestlé S.A.**
**1800 Vevey (CH)**

(72) Inventors:
• **GARG, Prateeksha**
**Gurgaon-122004, Haryana (IN)**
• **UPADHYAY, Rohit**
**Faridabad Haryana 121003 (IN)**
• **GULIA, Neelam**
**GURGAON HARYANA 122051 (IN)**

(74) Representative: **Dinger, Hansjörg**
**Société des Produits Nestlé S.A.**
**Avenue Nestlé 55**
**1800 Vevey (CH)**

(56) References cited:
**WO-A1-2021/148298**

• **MASZEWSKA MAGDALENA ET AL: "Oxidative Stability of Selected Edible Oils", MOLECULES, vol. 23, no. 7, 17 July 2018 (2018-07-17), pages 1746, XP055909575, DOI: 10.3390/ molecules23071746**
• **"Biopolymer-Based Formulations", 1 January 2020, ELSEVIER, NL, ISBN: 978-0-12-816897-4, article MEHMET DEMIRCI ET AL: "Chapter 31: Oleogels for food applications", pages: 781 - 811, XP055682039, DOI: 10.1016/ B978-0-12-816897-4.00031-X**
• **OH IM KYUNG ET AL: "Assessing the effectiveness of wax-based sunflower oil oleogels in cakes as a shortening replacer", LWT- FOOD SCIENCE AND TECHNOLOGY, ACADEMIC PRESS, UNITED KINGDOM, vol. 86, 9 August 2017 (2017-08-09), pages 430 - 437, XP085185558, ISSN: 0023-6438, DOI: 10.1016/ J.LWT.2017.08.021**
• **PARK CLIFFORD ET AL: "A Critical Review of the Last 10 Years of Oleogels in Food", FRONTIERS IN SUSTAINABLE FOOD SYSTEMS, vol. 4, 15 September 2020 (2020-09-15), XP055909577, DOI: 10.3389/fsufs.2020.00139**

EP 4 401 574 B1

**Description**

The present invention relates to a process for the production of an instant non-fried noodle. In particular the invention relates to a process for the production of an instant non-fried noodle comprising a) a lipid activation, wherein the lipid is activated by heating the lipid to a temperature between 100 to 180°C and applying an aeration into the lipid having an air flow rate between 0.5 to 8 L/h/g for 2 to 10h; b) mixing the activated lipid with flour and other dry ingredients with Kansui salts to form an uniform dough; c) sheeting and slitting the dough to obtain noodle strands; d) steaming the noodle strands; e) optionally seasoning; f) cutting and folding the noodle strands; g) drying and cooling,

It is already known to have two major type of instant noodles, which are an instant oil fried noodle and an instant non-fried noodle. The consumers like the fried taste of instant oil fried noodles but are concerned regarding the higher lipid content, as higher amounts of lipid are not considered to be healthy. The instant non-fried noodles have lower amounts of lipids compared to instant oil fried noodles but are missing the fried taste. In addition the non-fried noodles have a firmer texture, non-fatty mouthfeel and typical floury taste which does not match expectations from consumers who like fried noodles.

WO2021148298 relates to a kit of parts for a packed noodle product comprising a) a dried noodle cake and b) a tastemaker tablet, characterized in that the dried noodle cake comprises a formed hollow three-dimensional space and wherein the tastemaker tablet is embedded in that formed hollow three-dimensional space.

Therefore, in order to provide nutritional benefits, a reduced total amount of lipid in non-fried noodles is of considerable importance and that the non-fried noodle nevertheless should still have a fried taste. It is hence essential to explore a process delivering a right non-fried noodle texture and taste of a fried noodle. A shelf-life of at least 6 months of the product should be achieved.

<u>**Summary of the invention**</u>

The object of the present invention is to improve the state of the art and to provide an improved or at least an alternative solution to overcome at least some of the inconveniences described above. The object of the present invention is achieved by the subject matter of the independent claims. The dependent claims further develop the idea of the present invention.

Accordingly, the present invention provides in a first aspect a process for the production of an instant non-fried noodle comprising flour, Kansui salts, lipid, and optionally wheat gluten, starch, yeast extract or a combination thereof, the process comprising the steps of:

a) Activating the lipid;
b) Mixing the activated lipid from step a) with the flour and other dry ingredients with the Kansui salts to form an uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is activated in step a) by heating the lipid to a temperature between 100 to 180°C and applying an aeration into the lipid having an air flow rate between 0.5 to 8l/h/g for 2 to 10h.

It has been surprisingly found by the inventors that by using an activation of the lipid, wherein the lipid is activated by heating the lipid to a temperature between 100 to 180°C and applying an aeration into the lipid having an air flow rate between 0.5 to 8l/h/g for 2 to 10h, an instant non-fried noodle can be obtained which has a lower amount of lipid compared to an instant fried noodle but having a fried taste and a shelf-life of at least 6 months.

<u>**Detailed Description of the invention**</u>

In a first aspect the present invention pertains to a process for the production of an instant non-fried noodle comprising flour, Kansui salts, lipid, and optionally wheat gluten, starch, yeast extract or a combination thereof, the process comprising the steps of:

a) Activating the lipid;
b) Mixing the activated lipid from step a) with the flour and other dry ingredients with the Kansui salts to form a uniform dough;

c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is activated in step a) by heating the lipid to a temperature between 100 to 180°C and applying an aeration into the lipid having an air flow rate between 0.5 to 8l/h/g for 2 to 10h.

In a preferred aspect the present invention pertains to a process for the production of an instant non-fried noodle comprising flour, Kansui salts, lipid, and optionally wheat gluten, starch, yeast extract or a combination thereof, the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is activated in step a) by heating the lipid to a temperature between 100 to 180°C and applying an aeration into the lipid having an air flow rate between 0.5 to 8l/h/g for 2 to 10h and wherein the activated lipid comprises a total polar matter between 6.5 to 20% (based on the total lipid).

In a preferred aspect the present invention pertains to a process for the production of an instant non-fried noodle comprising flour, Kansui salts, lipid, and optionally wheat gluten, starch, yeast extract or a combination thereof, the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is an oleogel and it is activated in step a) by heating the lipid to a temperature between 100 to 180°C and applying an aeration into the lipid having an air flow rate between 0.5 to 8l/h/g for 2 to 10h.

In a preferred aspect the present invention pertains to a process for the production of an instant non-fried noodle comprising flour, Kansui salts, lipid, and optionally wheat gluten, starch, yeast extract or a combination thereof, the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is an oleogel and it is activated by in step a) heating the lipid to a temperature between 100 to 180°C and applying an aeration into the lipid having an air flow rate between 0.5 to 8l/h/g for 2 to 10h and wherein the activated lipid comprises a total polar matter between 6.5 to 20% (based on the total lipid).

In a preferred aspect the present invention pertains to a process for the production of an instant non-fried noodle comprising 45 to 80wt% of flour (by weight of the total composition), 0.2 to 3.5wt% of Kansui salts (by weight of the total composition), 0 to 7wt% of wheat gluten (by weight of the total composition), 0 to 20wt% of starch (by weight of the total composition), 0 to 3wt% of yeast extract (by weight of the total composition) and 1 to 10wt% of lipid (by weight of the total composition), the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is activated in step a) by heating the lipid to a temperature between 100 to 180°C and applying an aeration into the lipid having an air flow rate between 0.5 to 8l/h/g for 2 to 10h.

In a preferred aspect the present invention pertains to a process for the production of an instant non-fried noodle comprising 45 to 80wt% of flour (by weight of the total composition), 0.2 to 3.5wt% of Kansui salts (by weight of the total composition), 0 to 7wt% of wheat gluten (by weight of the total composition), 0 to 20wt% of starch (by weight of the total composition), 0 to 3wt% of yeast extract (by weight of the total composition) and 1 to 10wt% of lipid (by weight of the total composition), the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is activated in step a) by heating the lipid to a temperature between 100 to 180°C and applying an aeration into the lipid having an air flow rate between 0.5 to 8l/h/g and wherein the activated lipid comprises a total polar matter between 6.5 to 20% (based on the total lipid) for 2 to 10h.

In a preferred aspect the present invention pertains to a process for the production of an instant non-fried noodle comprising 45 to 80wt% of flour (by weight of the total composition), 0.2 to 3.5wt% of Kansui salts (by weight of the total composition), 0 to 7wt% of wheat gluten (by weight of the total composition), 0 to 20wt% of starch (by weight of the total composition), 0 to 3wt% of yeast extract (by weight of the total composition) and 1 to 10wt% of lipid (by weight of the total composition), the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is an oleogel and it is activated in step a) by heating the lipid to a temperature between 100 to 180°C and applying an aeration into the lipid having an air flow rate between 0.5 to 8l/h/g for 2 to 10h.

In a preferred aspect the present invention pertains to a process for the production of an instant non-fried noodle comprising 45 to 80wt% of flour (by weight of the total composition), 0.2 to 3.5wt% of Kansui salts (by weight of the total composition), 0 to 7wt% of wheat gluten (by weight of the total composition), 0 to 20wt% of starch (by weight of the total composition), 0 to 3wt% of yeast extract (by weight of the total composition) and 1 to 10wt% of lipid (by weight of the total composition), the process comprising the steps of:

a) Activating the lipid;
b) Mixing the activated lipid from step a) with the flour and other dry ingredients with the Kansui salts to form a uniform dough;
c) Sheeting and slitting the dough to obtain noodle strands;
d) Steaming the noodle strands from step c);
e) Optionally seasoning;
f) Cutting and folding the noodle strands from steps d) or e);
g) Drying;
h) Cooling.

wherein the lipid is an oleogel and it is activated in step a) by heating the lipid to a temperature between 100 to 180°C and applying an aeration into the lipid having an air flow rate between 0.5 to 8l/h/g for 2 to 10h and wherein the activated lipid comprises a total polar matter between 6.5 to 20% (based on the total lipid).

In a second aspect of the invention, there is provided a product according to claim 14 obtainable by the process of the invention.

The term "flour" according to this invention means at least one ingredient of wheat flour, oat flour, corn flour, rice flour, barley flour, millet flour or combinations thereof, preferably wheat flour. The flour has a particle size of 50 to 400 μm. A finer particle size could mean a high chance of starch to be damaged in the flour leading to higher water absorption. The dough would become sticky and causes operation issues. In addition noodle would turns sticky, starchy and non-elastic. A flour with a large particle size, on the other hand, needs longer water absorption time and often forms large dough lumps. In an embodiment the flour is standard refined wheat flour. In an embodiment the instant non-fried noodle comprises 45 to 80 wt% of flour (by weight of the total composition), preferable 50 to 80wt%, preferably 55 to 80wt%, preferably 60 to 80wt%, preferably 55 to 75wt%, preferably 60 to 75wt% (by weight of the total composition).

The term "kansui salts" comprises a mixture of alkaline salts comprising sodium chloride, sodium carbonate, potassium carbonate and sodium phosphate. In an embodiment the instant non-fried noodle comprises 0.2 to 3.5wt% of kansui salts (by weight of the total composition). In a preferred embodiment the kansui salts are dissolved in water to obtain a kansui solution. The term "kansui solution" comprises a mixture of 1 to 15wt% of alkaline salts comprising sodium chloride, sodium carbonate, potassium carbonate and sodium phosphate (based on the total amount of the solution) in 85 to 99wt% of water (based on the total amount of the solution), preferably the kansui solution comprises 3 to 7wt% of alkaline salts and 93 to 97wt% of water (based on the total amount of the solution).

The term "lipid" according to this invention means an oil, fat or oleogel, preferably an oil or oleogel. In an embodiment the oil is selected from the group consisting of sunflower oil (SO), high oleic sunflower oil (HOSO), soybean oil, palm oil, canola oil, ground nut oil or a combination thereof, preferably sunflower oil, high oleic sunflower oil or a combination thereof.

The term "oleogel" are gels in which the continuous liquid phase is oil. To create a network structure, alternative structuring agents are needed. Often these are small molecular weight molecules. Oleogels are biphasic colloid systems that liquid vegetable oils are immobilized by a three-dimensional network derived from gelators. Oils are entrapped within a thermo-reversible and three-dimensional gel network, providing solid-like properties without modifying their chemical compositions. In a preferred embodiment oleogel comprising a wax and an oil. The wax is present in the composition in an amount equal to or greater than the minimum gelling concentration for that composition. In a preferred embodiment the lipid is an oleogel. An oleogel has the advantage that the texture of the noodle dough as well as the texture of the obtained noodle is better compared to oil. An activated oleogel provides the fried taste in addition to the beneficial texture attributes for the noodle dough and the obtained noodle.

The term "activated lipid" according to this invention further comprises a total polar matter between 6.5 to 20% (based on the total lipid), preferably between 7 to 20%, preferably between 7.5 to 20%, preferably between 8 to 20%, preferably between 9 to 20%, preferably between 6.5 to 15%, preferably between 7 to 15%, preferably between 7.5 to 15%, preferably between 8 to 15%, preferably between 9 to 15%, preferably between 6.5 to 12%, preferably between 7 to 12%, preferably between 7.5 to 12%, preferably between 8 to 12%, preferably between 9 to 12% (based on the total lipid).

The term "activated lipid" according to this invention further comprises a para-anisidine value between 30 to 70, preferably between 30 to 60, preferably between 30 to 55, preferably between 30 to 50, preferably between 35 to 50, preferably between 35 to 45, preferably between 38 to 43.

The oleogel according to this invention comprises a total polar matter between 6.5 to 20% (based on the total lipid), preferably between 7 to 20%, preferably between 7.5 to 20%, preferably between 8 to 20%, preferably between 9 to 20%, preferably between 6.5 to 15%, preferably between 7 to 15%, preferably between 7.5 to 15%, preferably between 8 to 15%, preferably between 9 to 15%, preferably between 6.5 to 12%, preferably between 7 to 12%, preferably between 7.5 to 12%, preferably between 8 to 12%, preferably between 9 to 12% (based on the total lipid).

The oleogel according to this invention further comprises a para-anisidine value between 30 to 70, preferably between 30 to 60, preferably between 30 to 55, preferably between 30 to 50, preferably between 35 to 50, preferably between 35 to 45, preferably between 38 to 43.

In an embodiment the activated lipid comprises the fatty acids C16:0 in the range of 4 to 7 wt% (based on weight of total lipid) and C20:0 in the range of 0.5 to 1.2 wt% (based on weight of total lipid). In an embodiment the activated lipid comprises C16:0. C16:0 is palmitic acid. In a further embodiment C16:0 is in the range of 3 to 7 wt% (based on weight of total lipid), preferably C16:0 is in the range of 3 to 6 wt% (based on weight of total lipid). In an embodiment the activated lipid comprises C18:0. C18:0 is stearic acid. In a further embodiment C18:0 is in the range of 2 to 4 wt% (based on weight of total lipid). In an embodiment the activated lipid comprises C18:1. C18:1 is oleic acid. In a further embodiment C18:1 is in the range of 25 to 75 wt% (based on weight of total lipid). In an embodiment the oil comprises C18:2. C18:2 is linoleic acid. In a further embodiment C18:2 is in the range of 30 to 60 wt% (based on weight of total lipid). In an embodiment the oil comprises C20:0. C20:0 is arachidic acid. In a further embodiment C20:0 is in the range of 0.2 to 1.2 wt% (based on weight of total lipid).

In an embodiment the oleogel of this invention has a congealing point of 60 to 65°C. It is preferred that the lipid is solid at room temperature (20°C).

The term flow-rate is the volume of gas or air which passes per unit time. In an embodiment the air flow rate is between 0.5 to 8l/h/g, preferably between 0.5 to 7l/h/g, preferably between 0.5 to 6l/h/g, preferably between 0.5 to 5l/h/g, preferably between 1 to 7l/h/g, preferably between 1 to 6l/h/g, preferably between 1 to 5l/h/g, preferably between 2 to 4l/h/g. In an embodiment air is standard air or oxygen, preferably air.

The term "activated" means that the lipid is heated to a temperature between 100 to 180°C and applying an aeration into the lipid having an air flow rate between 0.5 to 8l/h/g for 2 to 10 hours, preferably the lipid is heated to a temperature between 120 to 170°C and applying an aeration into the lipid having an air flow rate between 0.5 to 8l/h/g for 2 to 10 hours, preferably the lipid is heated to a temperature between 140 to 160°C and applying an aeration into the lipid having an air flow rate between 0.5 to 8l/h/g for 2 to 10 hours, preferably the lipid is heated to a temperature between 140 to 160°C and applying an aeration into the lipid having an air flow rate between 1 to 5l/h/g for 2 to 10 hours.

The dough mixing time is between 10 to 40 minutes, preferably 15 to 30 minutes. A twin speed mixer is used. The mixing speed is between 50 to 120 rpm. High speed mixing (between 100 to 120 rpm) is recommended during the time the kansui solution is dosed to avoid localized dosing and to ensure homogeneity. For addition of small ingredients like calcium carbonate, fortificant (vitamin and/or mineral) it is recommended to make a pre-blend with flour before addition. The amount of water added has a big influence on dough formation. The moisture content of the dough after mixing should be between 20 to 40%, preferably between 25 to 35%. If too much water is added the dough will be too soft and sticky. If too less water is added the noodle will be brittle, doughy and hard-centered due to insufficient gelatinisation during steaming as degree of gelatinisation depends on moisture content of dough.

The term "sheeting" is a process step wherein the dough is passed through a series of rollers to obtain a final sheet of desired thickness which will then determine the noodle strand thickness. By sheeting the dough a network is developed as pressure is applied. In addition the sheeting removes entrapped air from the dough and therefore reduces porosity and result in less oil uptake.

The slitter/cutter called "kiriha" consists of a pair of grooved cylinders which cut and separate the dough sheet into strands that are trapped in the grooves. These strands are immediately removed by a comb-like scraper, called "kasuri" which is attached in between the two rollers. The width of the noodle strand is determined by Kiriha groove width.

The purpose of steaming is to gelatinize the starch in order to eliminate the raw and doughy taste on the end-product. Steaming time and temperature along with steam pressure affect product quality and are known to the person skilled in the art. Good steaming results to obtain at least 80% starch gelatinisation is giving a better association of starch granules and protein matrix as well as better continuity of protein network. The steaming time is between 0.5 to 15 minutes, preferably 0.5 to 7 minutes. A saturated steam is used. If steaming is insufficient, the final noodle will have a gritty center, doughy and raw wheat after taste (cereal note). Noodle strands coming out of the steamer are hot and tend to stick to the steamer mesh conveyor. This can lead to poor cutting and folding down the line. Therefore, the strands are cooled and slightly dried up using fans or blowers/air knives at the exit of steamer tunnel.

Seasoning means that flavor or flavors are added by a spraying or within a seasoning bath.

Drying is a process wherein moisture from cakes is removed to a desired level and doughy taste is eliminated in the end product. The drying is done at temperatures between 70 to 180 °C and a time between 60 to 600 seconds, preferably at temperatures between 80 to 180 °C and a frying time between 60 to 600 seconds, preferably at temperatures between 90 to 170 °C and a frying time between 60 to 600 seconds, preferably at temperatures between 90 to 160 °C and a frying time between 60 to 600 seconds. After drying the final moisture in the product is less than 10wt%, preferably between 2 to 10wt% (by weight of the total composition). The final product has a water activity below 0.6, preferably between 0.2 to 0.6, preferably between 0.2 to 0.5, preferably between 0.25 to 0.45.

In an embodiment the instant non-fried noodle has an amount of lipid in the range of 1 to 10wt% (by weight of the total composition), preferably between 2 to 8wt%, preferably between 3 to 5wt% (by weight of the total composition).

Cooling means that the temperature of the noodle after drying is reduced. It is desirable to have the noodle cake temperature the same as or close to room temperature before wrapping, preferably between 20 to 30°C, more preferably between 20 to 25°C. Otherwise, there may be condensation of water vapour in the packet of noodles, which may lead to mould growth. A side from condensates, hot cakes also cause expansion of air within the pack, subsequently causing difficulty in secondary packaging.

Those skilled in the art will understand that they can freely combine all features of the present invention disclosed herein. In particular, features described for different embodiments of the present invention may be combined. Where known equivalents exist to specific features, such equivalents are incorporated as if specifically referred to in this specification.

## Examples

### Example 1: Process

Activation of lipid is achieved by accelerated lipid oxidation catalyzed by meticulous treatment involving heat and aeration in a time dependent manner using an assembly purged with filtered, compressed, and micronized atmospheric air at specified temperature ranging between 140 to 160 °C, and an air flow rate ranging from 2-3 L/h/g of lipid for 2 to 10h. Non-fried Instant noodle manufacturing process involves mixing of flour (wheat flour) and kansui solution and lipid in a batch mixer. Noodle line used for the production is from CCK supplier. Dough from mixer is passed through rollers to form two sheets thereafter compounding the two dough sheets into one, reducing dough sheet to a desired thickness through a series of rollers. The final sheet is passed through the kiriha to slit the dough sheet and form the noodle strands, which are then steamed in a tunnel. The steamed noodles are cut, folded and moulded and afterwards dried. The cakes are cooled to ambient temperature before packing. The cakes are then packed in a bag form with single or multiple sachets of tastemaker.

Below table shows details of all the process steps with the process parameters:

| Process Steps | Process Parameters | Moisture |
|---|---|---|
| Mixing | High Speed: 90 Hz, 1 min Dry Mixing | 30-31% |
| | High Speed: 90 Hz, 4 min Kansui Dosing | |
| | Low Speed: 50 Hz, 16 minute for gluten development | |
| Sheeting & Slitting | Final Sheet Thickness: 1.05 mm, Kiriha K 22 | |
| Steaming | Time: 120 s, Saturated Steam | 31-32% |
| Cut and Fold | Bag type | |
| Drying | Temp: 100 - 190 °C, Time: 120 - 480 s | 2-6% |
| Cooling | Ambient temperature and Packaging | 2-6% |

*Water activity measurement*

Water activity is measured with AquaLab instruments 4TE and 4TEV connected to PC with Aqualink 4.0 software. Measurement is carried out at $25.0 \pm 0.5$°C according to validated on the official AOAC method 978.18

*Peroxide Value (PV) measurement*

PV in the samples is analyzed as per internal LI based on AOCS method Cd 8b-90 and can be applied to animal and vegetable oils and fats. It is the quantity of all the substances in terms of mill equivalents of peroxides per 1000 grams of sample that oxidize potassium iodide under the operating conditions. These substances are generally assumed to be peroxides or other similar products of fat oxidation.

*Total Polar Material (TPM) measurement*

TPM is measured according to ISO-8420:2002.

Briefly, 1.0 g of the oil sample was poured into a 10 mL volumetric flask and the volume was made up using elution solvent A, consisting of a mixture of light petroleum and diethyl ether (90:10, *v/v*). A slurry of 5 g of silica gel in approximately 10 mL of elution solvent A was prepared in a volumetric flask and filled into a glass column fitted with a cotton plug at the bottom. Five milliliters of the oil solution was poured into the column top followed by 60 mL of elution solvent A which leads to the elution of the non-polar fraction of oil (unaltered triacyclglycerols). Subsequently, diethyl ether (elution solvent B) was passed through the column for elution of the polar matter. Both the fractions were individually collected in flat bottom flasks and the amount of each fraction was determined gravimetrically, after the evaporation of the respective elution solvents. The percentage of TPM was calculated using below equation.

$$\%\text{TPM}= [W_{\text{oil sample}} - W_{\text{non-polar fraction}}]/W_{\text{oil sample}} \times 100$$

Where, $W_{\text{oil sample}}$ is the initial weight of oil sample and $W_{\text{non-polar fraction}}$ is the weight of non-polar fraction determined gravimetrically subsequent to the fractionation procedure.

*Free Fatty Acid (FFA) measurement*

FFA in the samples is analysed as per LI 03.516-3. This method corresponds to the International standard method ISO 660:2008 - Animal and vegetable fats and oils - determination of acid value and acidity with minor modifications. It is applicable to edible oils and fats, and the extracted fat. FFA's are generally formed due to the presence of moisture in the foods exposed to oil. The present method determines the amount of these FFA's formed by titration against a base, and generally expressed as percent oleic acid, unless otherwise stated.

*Para-anisidine Value (PAV) measurement*

PAV in the samples is analyzed as per International standard method ISO 6885:2016 - Animal and vegetable oils and fats - determination of anisidine value. PAV gives the value of the amount of aldehydes present (principally α- and β-unsaturated aldehydes) in oil generated during the heating.

**Examples 2-8:**

Comparison examples 2 to 4 are prepared according to example 1 but without lipid activation. Examples 5 to 8 are prepared according to example 1.

| | Comp. Ex. 2 | Comp. Ex. 3 | Comp. Ex. 4 | Ex. 5 |
|---|---|---|---|---|
| Noddle dough composition | | | | |
| Wheat flour [wt%] | 77 | 73 | 69 | 69 |
| Kansui [wt%] | 23 | 23 | 23 | 23 |
| Lipid | - | Non-activated sunflower oil | Non-activated SO-oleogel 3.5% wax | Activated SO-oleogel 3.5% wax |
| Amount of lipid [wt%] | - | 4 | 8 | 8 |
| Moisture in final instant noodle | 3.5% | 4.0% | 4.0% | 4.0% |
| Water Activity in final instant noodle | 0.3 | 0.3 | 0.35 | 0.3 |
| Oil composition | | | | |
| Total polar matter [% of total lipid] | - | 5 | 6 | 9.5 |
| Para-anisidine | - | 13 | 12 | 41 |
| Sensory | | | | |
| *Sensory data of fried intensity | 0 | 2 | 2 | 5 |
| *Sensory data of texture | 1 | 2 | 5 | 5 |

(continued)

| Sensory | | | | |
|---|---|---|---|---|
| Shelf-life | 9 months | 6-9 months | 6-9 months | 9 months |
| *0- lowest score, 5- highest score; 20 panellists tested. | | | | |

| | Ex. 6 | Ex. 7 | Ex. 8 |
|---|---|---|---|
| Wheat flour [wt%] | 69 | 73 | 62 |
| Kansui [wt%] | 23 | 23 | 23 |
| Lipid | Activated SO-oleogel 3.5% wax | Activated HOSO/SO 50/50 | Activated HOSO/SO 50/50 |
| Amount of lipid [wt%] | 4 | 4 | 3.5 |
| Starch | 4 | - | 11.5 |
| Moisture in final instant noodle | 5.0% | 4.0% | 4.0% |
| Water Activity in final instant noodle | 0.35 | 0.3 | 0.25 |
| Total polar matter [% of total lipid] | 9.5 | 9 | 9 |
| Para-anisidine | 41 | 42 | 42 |
| *Sensory data of fried intensity | 4 | 4 | 4 |
| *Sensory data of texture | 4.5 | 2.5 | 3.5 |
| Shelf-life | 9 months | 9 months | 9 months |
| *0- lowest score, 5- highest score; 20 panellists tested. | | | |

The best textural attributes (being bouncy, soft and non-sticky) have been achieved by using an oleogel (see examples 5 to 6). By using only an oil compared to an oleogel the texture is more firm, chewy and sticky (see examples 7 and 8). It is shown that by using an activated lipid (see examples 5 to 8) the overall fried intensity of the non-fried noodles has been increased compared to non-activated lipids (see comp examples 2 to 4).

**Claims**

1. A process for the production of an instant non-fried noodle comprising flour, Kansui salts, lipid, and optionally wheat gluten, starch, yeast extract or a combination thereof, the process comprising the steps of:

   a) Activating the lipid;
   b) Mixing the activated lipid from step a) with the flour and other dry ingredients with the Kansui salts to form an uniform dough;
   c) Sheeting and slitting the dough to obtain noodle strands;
   d) Steaming the noodle strands from step c);
   e) Optionally seasoning
   f) Cutting and folding the noodle strands from steps d) or e)
   g) Drying;
   h) Cooling.

   wherein the lipid is activated by heating the lipid to a temperature between 100 to 180°C and applying an aeration into the lipid having an air flow rate between 0.5 to 8 L/h/g for 2 to 10h.

2. A process for the production of an instant non-fried noodle as claimed in claim 1, wherein the flour is wheat flour, oat flour, corn flour, rice flour, barley flour, millet flour or combinations thereof, preferably wheat flour.

3. A process for the production of an instant non-fried noodle in any one of claims 1 to 2, wherein the weight of the flour is in the range of 47 to 80wt% by weight of the total composition.

4. A process for the production of an instant non-fried noodle in any one of claims 1 to 3, wherein the kansui salts comprises a mixture of sodium chloride, sodium carbonate, potassium carbonate and sodium phosphate.

5. A process for the production of an instant non-fried noodle in any one of claims 1 to 4, wherein the weight of the kansui salts are in the range of 0.2 to 3.5wt% by weight of the total composition.

6. A process for the production of an instant non-fried noodle in any one of claims 1 to 5, wherein the kansui salts are added as a solution of 1 to 10wt% of sodium chloride, sodium carbonate, potassium carbonate and sodium phosphate based on the total amount of the solution in 90 to 99wt% of water based on the total amount of the solution.

7. A process for the production of an instant non-fried noodle as claimed in any one of claims 1 to 6, wherein the activated lipid of step b) comprises a total polar matter between 6.5 to 20% based on the total lipid.

8. A process for the production of an instant non-fried noodle as claimed in any one of claims 1 to 7, wherein the lipid is an oleogel.

9. A process for the production of an instant non-fried noodle as claimed in any one of claims 1 to 8, wherein the lipid is an oleogel comprising a wax and an oil.

10. A process for the production of an instant non-fried noodle as claimed in any one of claims 1 to 9, wherein the lipid is an oleogel comprising a wax and a sunflower oil.

11. A process for the production of an instant non-fried noodle as claimed in any one of claims 1 to 10, wherein the weight of the lipid is in the range of 1 to 10wt% by weight of the total composition.

12. A process for the production of instant non-fried noodle as claimed in any one of claims 1 to 11, wherein the drying in step g) is done at a temperature between 70 to 180 °C and a drying time between 60 to 600 seconds.

13. A process for the production of an instant non-fried noodle as claimed in any one of claims 1 to 12, wherein the steaming is done by using saturated steam within 0.5 to 15min.

14. An instant non-fried noodle obtainable by the process as claimed in any one of claims 1 to 13, wherein the non-fried noodle comprising 45 to 80wt% of flour by weight of the total composition, 0.2 to 3.5wt% of Kansui salts by weight of the total composition, 0 to 7wt% of wheat gluten by weight of the total composition and 1 to 10wt% of lipid by weight of the total composition and wherein the lipid comprises a total polar matter between 6.5 to 20% based on the total lipid.

15. The use of the instant non-fried noodle as claimed in claim 14 for preparing a food product.


**Patentansprüche**

1. Verfahren für die Herstellung einer nicht gebratenen Instantnudel, umfassend Mehl, Kansui-Salze, Lipid und optional Weizengluten, Stärke, Hefeextrakt oder eine Kombination davon, das Verfahren umfassend die Schritte:

a) Aktivieren des Lipids;
b) Mischen des aktivierten Lipids aus Schritt a) mit dem Mehl und den anderen trockenen Zutaten mit den Kansui-Salzen, um einen gleichmäßigen Teig zu formen;
c) Auswalzen und Einschneiden des Teigs, um Nudelstränge zu erhalten;
d) Dämpfen der Nudelstränge aus Schritt c);
e) optional Würzen
f) Schneiden und Falten der Nudelstränge aus Schritt d) oder e)
g) Trocknen;
h) Kühlen.

wobei das Lipid durch Erwärmen des Lipids auf eine Temperatur von zwischen 100 und 180 °C und Anwenden einer Luftzufuhr in das Lipid, die eine Luftströmungsrate zwischen 0,5 und 8 l/h/g aufweist, für 2 bis 10 Stunden aktiviert wird.

2. Verfahren für die Herstellung einer nicht gebratenen Instantnudel nach Anspruch 1, wobei das Mehl Weizenmehl, Hafermehl, Maismehl, Reismehl, Gerstenmehl, Hirsemehl oder Kombinationen davon, vorzugsweise Weizenmehl, ist.

3. Verfahren für die Herstellung einer nicht gebratenen Instantnudel nach einem der Ansprüche 1 bis 2, wobei das Gewicht des Mehls in dem Bereich von 47 bis 80 Gew.-% der Gesamtzusammensetzung liegt.

4. Verfahren für die Herstellung einer nicht gebratenen Instantnudel nach einem der Ansprüche 1 bis 3, wobei die Kansui-Salze eine Mischung aus Natriumchlorid, Natriumcarbonat, Kaliumcarbonat und Natriumphosphat umfassen.

5. Verfahren für die Herstellung einer nicht gebratenen Instantnudel nach einem der Ansprüche 1 bis 4, wobei das Gewicht der Kansui-Salze in dem Bereich von 0,2 bis 3,5 Gew.-% der Gesamtzusammensetzung liegt.

6. Verfahren für die Herstellung einer nicht gebratenen Instantnudel nach einem der Ansprüche 1 bis 5, wobei die Kansui-Salze als eine Lösung aus 1 bis 10 Gew.-% Natriumchlorid, Natriumcarbonat, Kaliumcarbonat und Natriumphosphat, basierend auf der Gesamtmenge der Lösung, in 90 bis 99 Gew.-% Wasser, basierend auf die Gesamtmenge der Lösung, hinzugegeben werden.

7. Verfahren für die Herstellung einer nicht gebratenen Instantnudel nach einem der Ansprüche 1 bis 6, wobei das aktivierte Lipid aus Schritt b) eine Gesamtpolarmasse von zwischen 6,5 und 20 %, basierend auf dem Gesamtlipid, umfasst.

8. Verfahren für die Herstellung einer nicht gebratenen Instantnudel nach einem der Ansprüche 1 bis 7, wobei das Lipid ein Oleogel ist.

9. Verfahren für die Herstellung einer nicht gebratenen Instantnudel nach einem der Ansprüche 1 bis 8, wobei das Lipid ein Oleogel, umfassend ein Wachs und ein Öl, ist.

10. Verfahren für die Herstellung einer nicht gebratenen Instantnudel nach einem der Ansprüche 1 bis 9, wobei das Lipid ein Oleogel, umfassend ein Wachs und ein Sonnenblumenöl, ist.

11. Verfahren für die Herstellung einer nicht gebratenen Instantnudel nach einem der Ansprüche 1 bis 10, wobei das Gewicht des Lipids in dem Bereich von 1 bis 10 Gew.-% der Gesamtzusammensetzung liegt.

12. Verfahren für die Herstellung der nicht gebratenen Instantnudel nach einem der Ansprüche 1 bis 11, wobei das Trocknen in Schritt g) bei einer Temperatur von zwischen 70 und 180 °C und einer Trocknungszeit von zwischen 60 und 600 Sekunden erfolgt.

13. Verfahren für die Herstellung einer nicht gebratenen Instantnudel nach einem der Ansprüche 1 bis 12, wobei das Dämpfen durch Verwenden von Sattdampf innerhalb von 0,5 bis 15 min. erfolgt.

14. Nicht gebratene Instantnudel, die durch das Verfahren nach einem der Ansprüche 1 bis 13 erhältlich ist, wobei die nicht gebratene Nudel zu 45 bis 80 Gew.-% Mehl nach Gewicht der Gesamtzusammensetzung, zu 0,2 bis 3,5 Gew.-% Kansui-Salze nach Gewicht der Gesamtzusammensetzung, zu 0 bis 7 Gew.-% Weizengluten nach Gewicht der Gesamtzusammensetzung und zu 1 bis 10 Gew.-% Lipid nach Gewicht der Gesamtzusammensetzung umfasst und wobei das Lipid eine Gesamtpolarmasse von zwischen 6,5 und 20 %, basierend auf dem Gesamtlipid, umfasst.

15. Verwendung der nicht gebratenen Instantnudel nach Anspruch 14 zum Zubereiten eines Nahrungsmittelprodukts.

**Revendications**

1. Procédé de production de nouilles non frites instantanées comprenant de la farine, des sels kansui, des lipides, et éventuellement du gluten de blé, de l'amidon, de l'extrait de levure ou une combinaison de ceux-ci, le procédé comprenant les étapes consistant à :

a) Activer les lipides ;
b) Mélanger les lipides activés de l'étape a) à la farine et aux autres ingrédients secs avec les sels kansui pour former une pâte uniforme ;
c) Laminer et couper la pâte pour obtenir des brins de nouilles ;
d) Faire cuire à la vapeur les brins de nouilles de l'étape c) ;
e) Éventuellement assaisonner
f) Découper et plier les brins de nouilles des étapes d) ou e)
g) Sécher ;
h) Refroidir.

dans lequel les lipides sont activés en chauffant les lipides à une température comprise entre 100 et 180 °C et en appliquant une aération dans les lipides ayant un débit d'air compris entre 0,5 et 8 L/h/g pendant 2 à 10 heures.

2. Procédé de production de nouilles non frites instantanées selon la revendication 1, dans lequel la farine est de la farine de blé, de la farine d'avoine, de la farine de maïs, de la farine de riz, de la farine d'orge, de la farine de millet ou des combinaisons de celles-ci, de préférence de la farine de blé.

3. Procédé de production de nouilles non frites instantanées selon l'une quelconque des revendications 1 à 2, dans lequel le poids de la farine est compris entre 47 et 80 % en poids de la composition totale.

4. Procédé de production de nouilles non frites instantanées selon l'une quelconque des revendications 1 à 3, dans lequel les sels kansui comprennent un mélange de chlorure de sodium, de carbonate de sodium, de carbonate de potassium et de phosphate de sodium.

5. Procédé de production de nouilles non frites instantanées selon l'une quelconque des revendications 1 à 4, dans lequel le poids des sels kansui est compris entre 0,2 et 3,5 % en poids de la composition totale.

6. Procédé de production de nouilles non frites instantanées selon l'une quelconque des revendications 1 à 5, dans lequel les sels kansui sont ajoutés sous la forme d'une solution de 1 à 10 % en poids de chlorure de sodium, de carbonate de sodium, de carbonate de potassium et de phosphate de sodium par rapport à la quantité totale de la solution dans 90 à 99 % en poids d'eau par rapport à la quantité totale de la solution.

7. Procédé de production de nouilles non frites instantanées selon l'une quelconque des revendications 1 à 6, dans lequel les lipides activés de l'étape b) comprennent une matière polaire totale comprise entre 6,5 et 20 % sur la base des lipides totaux.

8. Procédé de production de nouilles non frites instantanées selon l'une quelconque des revendications 1 à 7, dans lequel les lipides sont des oléogels.

9. Procédé de production de nouilles non frites instantanées selon l'une quelconque des revendications 1 à 8, dans lequel les lipides sont des oléogels comprenant une cire et une huile.

10. Procédé de production de nouilles non frites instantanées selon l'une quelconque des revendications 1 à 9, dans lequel les lipides sont des oléogels comprenant une cire et une huile de tournesol.

11. Procédé de production de nouilles non frites instantanées selon l'une quelconque des revendications 1 à 10, dans lequel le poids des lipides est compris entre 1 et 10 % en poids de la composition totale.

12. Procédé de production de nouilles non frites instantanées selon l'une quelconque des revendications 1 à 11, dans lequel le séchage à l'étape g) est effectué à une température comprise entre 70 et 180 °C et à une durée de séchage comprise entre 60 et 600 secondes.

13. Procédé de production de nouilles non frites instantanées selon l'une quelconque des revendications 1 à 12, dans lequel la cuisson à la vapeur est effectuée à l'aide de vapeur saturée dans un délai de 0,5 à 15 minutes.

14. Nouilles non frites instantanées obtenues par le procédé selon l'une quelconque des revendications 1 à 13, dans lesquelles les nouilles non frites comprennent 45 à 80 % en poids de farine par rapport à la composition totale, 0,2 à 3,5 % en poids de sels kansui par rapport à la composition totale, 0 à 7 % en poids de gluten de blé par rapport à la composition totale et 1 à 10 % en poids de lipides par rapport à la composition totale, et dans lesquelles les lipides comprennent une matière polaire totale comprise entre 6,5 et 20 % sur la base des lipides totaux.

15. Utilisation des nouilles non frites instantanées selon la revendication 14 pour la préparation d'un produit alimentaire.

**EP 4 401 574 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021148298 A